# EUROPÄISCHE PATENTSCHRIFT

(11) **EP 1 335 845 B1**
(45) Veröffentlichungstag und Bekanntmachung des Hinweises auf die Patenterteilung: **17.08.2005**
(21) Anmeldenummer: 01964920.1
(22) Anmeldetag: 18.08.2001
(51) Int. Cl.: B60S 1/34

(54) **WISCHVORRICHTUNG UND VERFAHREN ZUM JUSTIEREN DER AUFLAGEKRAFT EINES WISCHERARMS**
WIPER DEVICE AND METHOD FOR ADJUSTING THE BEARING FORCE OF A WIPER ARM
DISPOSITIF D'ESSUIE-GLACE ET PROCEDE POUR L'AJUSTEMENT DE LA FORCE D'APPUI D'UN BRAS D'ESSUIE-GLACE

(30) Priorität: 18.10.2000 DE 10051570
(43) Veröffentlichungstag der Anmeldung: 20.08.2003
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2001/003171
(87) Internationale Veröffentlichungsnummer: WO 2002/032730

(56) Entgegenhaltungen:
- WO-A-93/09980
- FR-A- 2 720 708
- FR-A- 2 724 896

## Beschreibung

### Stand der Technik

Die Erfindung betrifft eine Wischvorrichtung sowie ein Verfahren zum Justieren der Auflagekraft eines Wischerarms nach Gattung der unabhängigen Ansprüche.

Es sind schon zahlreiche Wischvorrichtungen für Kraftfahrzeuge bekannt, bei denen ein Wischblatt, welches an einem Wischerarm befestigt ist mit Hilfe einer Zugfeder zur Erzeugung einer Wischarmauflagekraft gegen die Scheibe des Kraftfahrzeuges gedrückt wird. Dazu ist der Wischerarm mit einem Scharnierbolzen schwenkbar an einem Drehkopf befestigt, der mit der Wischerwelle drehfest verbunden ist und beispielsweise eine Pendelbewegung ausführt. Die Zugfeder ist dabei mit einem Ende am Wischerarm und mit ihrem anderen Ende am Drehkopf auf der der Scheibe zugewandten Seite in einen Bolzen eingehakt. Die Auflagekraft kann bei solchen Systemen nur durch Austausch der Feder oder eines die Feder haltenden Bügels gegen eine andere Feder oder einen anderen Bügel variiert bzw. eingestellt werden.

FR-A-2 720 708 offenbart den Oberbegriff des Anspruchs 1.

### Vorteile der Erfindung

Die erfindungsgemäße Wischvorrichtung mit den Merkmalen des Hauptanspruchs hat den Vorteil, daß die Wischarmauflagekraft mit Hilfe eines Exzenterbolzens als Justageelement individuell für jede einzelne Wischvorrichtung eingestellt werden kann.

Durch Toleranzen der Federkonstante und Positionstoleranzen der Bauteile, die die Anordnung der Feder und die Federvorspannung selbst bestimmen, entsteht eine relativ große Streuung der Auflagekräfte zwischen den einzelnen Wischvorrichtungen einer Serie. Dies hat zur Folge, daß die mittlere Auflagekraft aller Wischvorrichtungen einer Serie so festgelegt werden muß, daß eine gute Wischqualität auch dann gegeben ist, wenn sich die Auflagekraft der einzelnen Wischvorrichtung am Rande des Toleranzbereiches der Serie bewegt. Dieser ist einerseits durch den Wischermotor begrenzt, da bei dessen Auslegung die Auflagekraft linear in die Berechnung eingeht und bei maximaler Auflagekraft - also maximaler Reibkraft des Wischgummis - der Wischermotor immer noch in der Lage sein muß, die Wischvorrichtung zu betreiben. Andererseits ist der Toleranzbereich durch das Hochgeschwindigkeitsverhalten begrenzt. Bei minimaler Auflagekraft des Wischerarms und damit des Wischblatts muß auch bei hohen Geschwindigkeiten ein akzeptables Wischergebnis erzielt werden.

Durch das Justageelement kann auf sehr einfache Weise, ohne Verwendung zusätzlicher Bauteile oder deren kompletten Austausch, eine vorbestimmte Wischarmauflagekraft eingestellt werden.

Durch die in den Unteransprüchen aufgeführten Maßnahmen ergeben sich vorteilhafte Weiterbildungen und Verbesserungen der im Hauptanspruch angegebenen Merkmale.

Ist der Wischerarm an seinem Ende schwenkbar mit einem Drehkopf verbunden und das Spannelement zwischen Wischerarm und Drehkopf gespannt, kann die Auflagekraft, beispielsweise auf einem separaten Prüfstand, genau eingestellt werden und anschließend die Drehkopf-Spannelement-Wischarm-Kombination auf die Wischvorrichtung montiert werden.

Ist das Spannelement am Drehkopf um den Exzenterbolzen gehakt, so ist es in der Montage mit wenig Zeitaufwand montierbar und überträgt die Justierbewegung gleichmäßig.

Besteht das Spannelement darüber hinaus aus mindestens einer Zugfeder, die mittels eines Hakens um den Exzenterbolzen gehakt ist, so können handelsübliche kostengünstige Zugfedern verwendet werden.

Weist das Justageelement einen Außenrändel zur Fixierung auf, so kann es sich vorteilhafter Weise nicht durch das am Exzenterbolzen angreifende Drehmoment während des Betriebes verdrehen, wodurch die Justage verloren ginge.

Besonders vorteilhaft ist es, wenn das Justageelement einen Innen- oder Außenvielkant oder einen Schlitz oder Kreuzschlitz für den Justagevorgang aufweist. So ist dieser mit handelsüblichem Werkzeug leicht vorzunehmen.

Dabei ist es besonders vorteilhaft, wenn der Exzenterbolzen nach dem Verdrehen gesichert wird, was beispielsweise durch Nieten, Verprägen, Einpressen oder Schweißen geschehen kann.

Weiterhin ist vorteilhaft, wenn der Exzenterbolzen drei zylindrische Abschnitte aufweist, wobei die beiden entlang seiner Längserstreckung äußeren Abschnitte eine koaxiale Mittelachse aufweisen und der mittlere Abschnitt eine von der koaxialen Mittelachse verschiedene, insbesondere achsenparallele Mittelachse aufweist. Auf diese Weise kann nicht nur die Vorspannung des Spannelementes verändert werden, sondern insbesondere auch das auf den Wischerarm wirkende Drehmoment, da der Abstand zwischen der Federkraft, die an der achsenparallelen Mittelachse angreift, und dem Scharnierbolzen beim Drehen des Exzenterbolzens verändert wird.

Weisen die beiden äußeren Abschnitte unterschiedliche Durchmesser auf, so ist der Exzenterbolzen bei der Montage leichter einzufügen und beispielsweise gegen ein herausfallen gesichert. Hierbei ist es natürlich auch von Vorteil, wenn der Bolzen auf zumindest einer Seite eine Fase aufweist.

Ist der Exzenterbolzen in die Bohrung des Drehkopfes einsetzbar und weist entlang eines der beiden äußeren Abschnitte eine teilweise Rändelung auf, so ist es vorteilhaft, wenn der mittlere Abschnitt des Exzenterbolzens so gestaltet ist, insbesondere so breit ist, daß das Spannelement in den Exzenterbolzen eingehakt werden kann ohne daß Rändelung und Bohrung in Eingriff stehen. Auf diese Weise kann bei der Montage der Exzenterbolzen in die Bohrung eingeführt werden, das Spannelement justiert werden und anschließend durch vollständiges Einschlagen des Exzenterbolzens vor Verdrehen gesichert werden, da sich dadurch erst nach Beendigung der Justage eine form- und kraftschlüssige Verbindung zwischen Bohrung und Exzenterbolzen ausbildet.

Das erfindungsgemäße Verfahren nach Anspruch 11 hat den Vorteil, daß eine formschlüssige Verbindung zwischen Exzenterbolzen und Drehkopf erreicht wird, ohne eine Einbuße bei der Genauigkeit der Justierung hinnehmen zu müssen, da der Exzenterbolzen in jeder Winkelstellung eingeschlagen werden kann.

### Zeichnung

Ein Ausführungsbeispiel der Erfindung ist in den Zeichnungen dargestellt und in der nachfolgenden Beschreibung näher erläutert. Es zeigen:
Figur 1a einen Wischerarm mit Wischblatt und einen Drehkopf einer erfindungsgemäßen Wischvorrichtung,
Figur 1b eine Schematische Detailansicht des eingehakten Spannelements,
Figur 2 einen Exzenterbolzen in perspektivischer Darstellung und
Figur 3a einen Exzenterbolzen mit Rändelung bei der Montage in schematischer Schnittdarstellung bei der Justage und
Figur 3b einen Exzenterbolzen wie in Figur 3a nach der Arretierung.

### Beschreibung des Ausführungsbeispiels

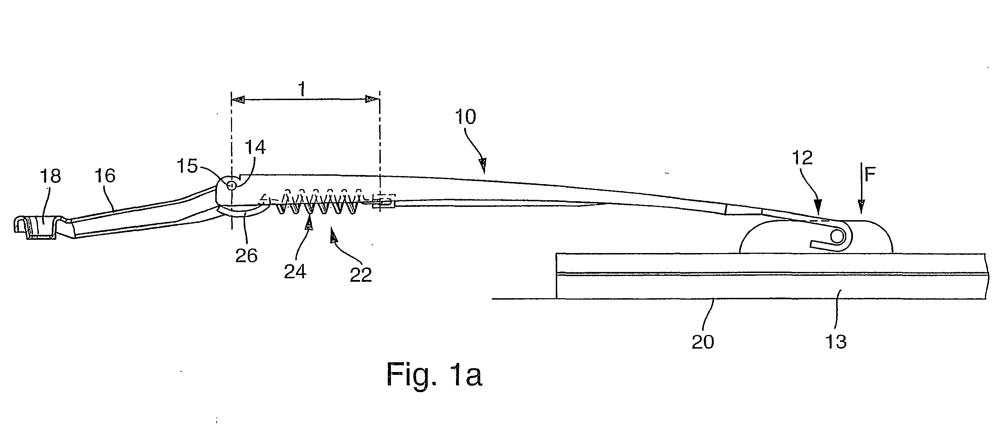

Figur 1a zeigt einen Wischerarm 10 einer erfindungsgemäßen Wischvorrichtung. Dieser weist zwei Enden auf, wobei an dem einen Ende 12 ein Wischblatt 13 befestigt ist. Am anderen Ende 14 ist der Wischerarm 10 mittels eines Scharnierbolzens 15 an einem Drehkopf 16 schwenkbar angelenkt. An seinem, dem Wischerarm 10 abgewandten Ende weist der Drehkopf 16 eine Aufnahmebuchse 18 zur Befestigung an einer nicht dargestellten Abtriebswelle der Wischvorrichtung auf. Am einen Ende 12 des Wischerarms 10 ist das Wischblatt 13 angelenkt, welches auf einer Wischfläche 20 aufliegt. Ist die Wischvorrichtung in ein Kraftfahrzeug eingebaut, entspricht die Wischfläche der Windschutzscheibe oder Heckscheibe des Fahrzeugs.

Am anderen Ende 14 des Wischerarms 10 ist auf der der Wischfläche 20 zugewandten Seite des Wischerarms 10 ein Spannelement 22 befestigt. Es besteht aus einer Zugfeder 24 und einem Haken 26, die jeweils an der der Wischfläche 20 zugewandten Seite des Wischerarms 10 und des Drehkopfes 16 unter Vorspannung eingehakt sind. Durch die Spannung des Spannelements 22 wird der Wischerarm 10 um seinen Scharnierbolzen 15 mit seinem einen Ende 12 mit der Kraft F in Richtung der Wischfläche 20 gedrückt.

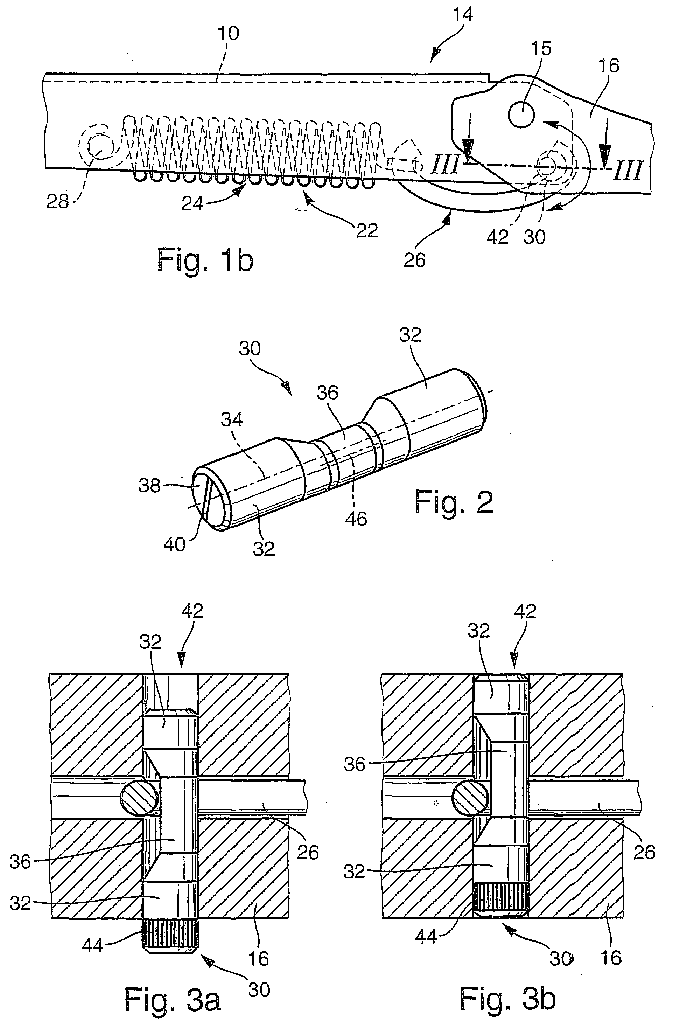

In Figur 1b ist das andere Ende des Wischerarms 10 mit dem Spannelement 22 im Detail dargestellt. Innerhalb der beiden Flanken des U-förmigen Profils des Wischerarms 10 ist die Zugfeder 24 des Spannelements 22 um einen Querbolzen 28 gehakt, der in einem Abstand A vom Scharnierbolzen 15 das U-förmige Profilteil des Wischerarms 10 durchgreift. Die Zugfeder 24 hakt an ihrer anderen Seite in den Haken 26, der wiederum um einen Exzenterbolzen 30 als Justageelement gehakt ist. Dadurch wirkt ein Drehmoment um den Scharnierbolzen 15 auf den Wischerarm 10 ein. Der Exzenterbolzen 30 sitzt dabei vollständig innerhalb einer Bohrung 42 des Drehkopfes 16. Durch Drehen des Exzenterbolzens 30 kann auf diese Weise die Vorspannung der Zugfeder 24 verändert werden, wodurch sich die Auflagekraft F, mit der das eine Ende 12 des Wischerarms das Wischblatt 13 gegen die Wischfläche 20 drückt, verändert.

In Figur 2 ist der Exzenterbolzen 30 detailliert dargestellt. Dieser weist im wesentlichen drei zylindrische Abschnitte auf, wobei die beiden entlang seiner Längserstreckung äußeren Abschnitte 32 eine koaxiale Mittelachse 34 aufweisen. Die Mittelachse des mittleren Abschnitts 36 ist von der koaxialen Mittelachse 34 verschieden, insbesondere achsenparallel zur koaxialen Mittelachse 34.

Der Radius des mittleren Abschnitts 36 ist stets kleiner oder gleich der Differenz zwischen dem Radius der äußeren Abschnitte 32 und dem Abstand zwischen koaxialer Mittelachse 34 und der achsenparallelen Mittelachse 46, oder anders ausgedrückt ist der mittlere Abschnitt 36 im Querschnitt immer innerhalb des Kreises den die äußeren Abschnitte 32 im Querschnitt vorgeben, da sich der Exzenterbolzen 30 ansonsten nicht in die Bohrung 42 einführen ließe.

Auf mindestens einer der Stirnseiten 38 des Exzenterbolzens 30 weist dieser einen Schlitz 40 auf, der das Drehen des Exzenterbolzens 30 innerhalb der Bohrung 42 des Drehkopfes 16 ermöglicht. Natürlich ist es auch möglich, auf die Stirnfläche 38 einen Kreuzschlitz oder einen Innen- oder Außenvielkant anzuordnen um die Justage mittels handelsüblichen Werkzeugs vornehmen zu können. Ist der Exzenterbolzen 30 in der Bohrung 42 des Drehkopfes 16 eingebracht, so kann durch eine Drehung des Exzenterbolzens 30 die Auflagekraft F bzw. die Vorspannung des Spannelements 22 eingestellt werden und anschließend der Exzenterbolzen beispielsweise mittels Nieten, Verprägen, Einpressen oder Schweißen vor dem Verdrehen gesichert werden.

Um ein Durchfallen des Exzenterbolzens 30 während der Montage zu verhindern, können die beiden äußeren Abschnitte 32 auch unterschiedliche Radien aufweisen.

In Figur 3 ist ein Schnitt durch einen Drehkopf 16 im Bereich des Exzenterbolzens 30 dargestellt. Der Exzenterbolzen weist dabei an einem seiner äußeren Abschnitte 32 an seiner dem mittleren Abschnitt 36 abgewandten Seite eine Rändelung 44 als Sicherungselement auf. Der mittlere Abschnitt 36 hinsichtlich seiner Längserstreckung so bemessen, daß der Haken 26 des Spannelementes 22 um den mittleren Abschnitt 36 gehakt werden kann, ohne daß die Rändelung 44 mit der Bohrung 42 in Eingriff steht. Auf diese Weise kann die Auflagekraft F justiert werden und am Ende des Justiervorgangs der Exzenterbolzen 30 in die Bohrung eingepreßt und damit arretiert werden, so daß eine formschlüssige Verbindung zwischen Bohrung 42 und Rändelung 44 den Exzenterbolzen 30 vor dem Verdrehen sichert. Dies ist in Figur 3b dargestellt.

Das erfindungsgemäße Verfahren nach Anspruch 11 kann mit einem in Figur 3 dargestellten Exzenterbolzen 30 durchgeführt werden. Dabei weist der Exzenterbolzen 30 teilweise entlang seiner Längserstreckung eine Rändelung 44 als Sicherungselement auf.

Im ersten Schritt wird der Exzenterbolzen 30 in die Bohrung 42 eingesetzt, jedoch nur so weit, daß die Rändelung 44 noch nicht in der Bohrung 42 versenkt ist. Der mittlere Abschnitt des Exzenterbolzens 30 ist dabei so breit, daß bereits dieses partielle Einsetzen ausreicht, um den Haken 26 des Spannelements 22 um den Exzenterbolzen zu haken.

In einem zweiten Schritt wird dann die Auflagenkraft F durch verdrehen des Exzenterbolzens 30 eingestellt und anschließend, in einem dritten Schritt, der Exzenterbolzen 30 in die Bohrung 42 eingepreßt, so daß die Rändelung 44 mit der Bohrung 42 eine form- bzw. kraftschlüssige Verbindung bewirkt.

Hierbei kann als Sicherungselement natürlich auch ein Vielkant, eine einzelne Nocke oder ähnliches anstatt der Rändelung 44 dienen.

Anstatt des Exzenterbolzens 30 kann in einer Variation der Erfindung beispielsweise auch ein Bolzen verwendet werden, der in dem entlang seiner Längserstreckung mittleren Bereich ein durchgreifendes Schraubelement aufweist. Ist dieses mit seiner dem Kopf abgewandten Seite mit dem Haken 26 in Eingriff, kann zur Justage der Kopf des Schraubelementes verdreht und damit die Federvorspannung erhöht werden.

## Patentansprüche

1. Wischvorrichtung, insbesondere für ein Kraftfahrzeug, mit einem Wischerarm (10) der an seinem einen Ende (12) mit einem Wischblatt (13) verbindbar ist und in einem Abstand (A) von seinem anderen Ende (14) aus, mit einem, eine Zugfeder (24) umfassenden Spannelement (22) verbunden ist, welches das eine Ende (12) des Wischerarms (10) mit einer Kraft F in Richtung einer Wischfläche (20) drückt, **dadurch gekennzeichnet, dass** ein Exzenterbolzen (30) als Justageelement zur Einstellung der Kraft F vorgesehen ist.

2. Wischvorrichtung nach Anspruch 1, **dadurch gekennzeichnet, dass** der Wischerarm (10) an seinem anderen Ende (14) schwenkbar mit einem Drehkopf (16) verbunden ist und das Spannelement (22) zwischen Wischerarm (10) und Drehkopf (16) gespannt ist.

3. Wischvorrichtung nach einem der vorhergehenden Ansprüche, **dadurch gekennzeichnet, dass** das Spannelement (22) am Drehkopf (16) um das Justageelement (30) gehakt ist.

4. Wischvorrichtung nach einem der vorhergehenden Ansprüche, **dadurch gekennzeichnet, dass** das Spannelement (22) mittels eines Hakens (26) um das Justageelement (30) gehakt ist.

5. Wischvorrichtung nach einem der vorhergehenden Ansprüche, **dadurch gekennzeichnet, dass** das Justageelement (30) eine Rändelung (44) zur Fixierung aufweist.

6. Wischvorrichtung nach einem der vorhergehenden Ansprüche, **dadurch gekennzeichnet, dass** das Justageelement (30) einen Innen- oder Außenvielkant, einen Schlitz (40) oder einen Kreuzschlitz an seiner Stirnfläche zur Justage aufweist.

7. Wischvorrichtung nach einem der vorhergehenden Ansprüche, **dadurch gekennzeichnet, dass** das Justageelement (30) insbesondere durch Nieten, Verprägen, Einpressen oder Schweißen, vor dem Verdrehen gesichert ist.

8. Wischvorrichtung nach einem der vorhergehenden Ansprüche, **dadurch gekennzeichnet, dass** der Exzenterbolzen (30) drei zylindrische Abschnitte (32, 36) aufweist, wobei die beiden, entlang der Längserstreckung äußeren Abschnitte (32) eine koaxiale Mittelachse (34) aufweisen und der mittlere Abschnitt (36) eine von der koaxialen Mittelachse (34) verschiedene, insbesondere achsenparallele Mittelachse (46) aufweist.

9. Wischvorrichtung nach Anspruch 8, **dadurch gekennzeichnet, dass** die beiden äußeren Abschnitte (32) unterschiedliche Durchmesser aufweisen.

10. Wischvorrichtung nach Anspruch 8 oder 9, **dadurch gekennzeichnet, dass** der Exzenterbolzen (30) in eine Bohrung (42) des Drehkopfes einsetzbar ist, dass entlang eines der beiden äußeren Abschnitte (32) eine, insbesondere in Axialrichtung teilweise Rändelung (44) zur Arretierung aufweist und dass sein mittlerer Abschnitt (36) so gestaltet ist, insbesondere zumindest so breit ist, dass das Spannelement (22), ohne dass Rändelung (44) und Bohrung (42) in Eingriff stehen, justierbar ist.

11. Verfahren zum Justieren der Auflagekraft eines Wischerarmes (10) einer Wischvorrichtung, insbesondere nach einem der vorhergehenden Ansprüche, mit mindestens folgenden Schritten:
- teilweises Einsetzen eines Exzenterbolzens (30), der entlang seiner Längserstreckung zumindest partiell ein Sicherungselement, insbesondere eine Rändelung (44) aufweist, in eine Bohrung (42),
- Einstellen der Auflagekraft mindestens durch Verdrehen,
- Einpressen des Exzenterbolzens (30) zumindest soweit, dass sich wesentliche Abschnitte des Sicherungselements (44) innerhalb der Bohrung (42) befinden.

## Claims

1. Wiping device, in particular for a motor vehicle, with a wiper arm (10) which can be connected at one end (12) to a wiper blade (13) and is connected, at a distance (A) from its other end (14), to a tension element (22) which comprises a tension spring (24) and which presses the one end (12) of the wiper arm (10) in the direction of a wiping surface (20) with a force F, **characterized in that** an eccentric pin (30) is provided as an adjusting element for setting the force F.

2. Wiping device according to Claim 1, **characterized in that** the wiper arm (10) is connected pivotably at its other end (14) to a rotary head (16), and the tension element (22) between the wiper arm (10) and the rotary head (16) is tensioned.

3. Wiping device according to one of the preceding claims, **characterized in that** the tension element (22) is hooked on the rotary head (16) around the adjusting element (30).

4. Wiping device according to one of the preceding claims, **characterized in that** the tension element (22) is hooked around the adjusting element (30) by means of a hook (26).

5. Wiping device according to one of the preceding claims, **characterized in that** the adjusting element (30) has a knurling (44) for fixing.

6. Wiping device according to one of the preceding claims, **characterized in that** the adjusting element (30) has an inner or outer polygon, a slot (40) or a cross slot on its end face for adjustment.

7. Wiping device according to one of the preceding claims, **characterized in that** the adjusting element (30) is secured against rotation, in particular, by riveting, embossing, pressing-in or welding.

8. Wiping device according to one of the preceding claims, **characterized in that** the eccentric pin (30) has three cylindrical portions (32, 36), the two outer portions (32) along the longitudinal extent having a coaxial mid-axis (34), and the middle portion (36) having a mid-axis (46) which is different from the coaxial mid-axis (34) and, in particular, is axially parallel.

9. Wiping device according to Claim 8, **characterized in that** the two outer portions (32) have different diameters.

10. Wiping device according to Claim 8 or 9, **characterized in that** the eccentric pin (30) can be inserted into a bore (42) of the rotary head, **in that** has, along one of the two outer portions (32) a partial knurling (44), particularly in the axial direction, for locking, and **in that** its middle portion (36) is configured in such a way, in particular has at least a width such that the tension element (22) can be adjusted, without the knurling (44) and the bore (42) being in engagement.

11. Method for adjusting the bearing force of a wiper arm (10) of a wiping device, in particular according to one of the preceding claims, having at least the following steps:
- partial insertion of an eccentric pin (30), which has along its longitudinal extent, at least partially, a securing element, in particular a knurling (44), into a bore (42),
- setting of the bearing force at least by rotation,
- pressing-in of the eccentric pin (30) at least to an extent such that substantial portions of the securing element (44) are located within the bore (42).

## Revendications

1. Dispositif d'essuie-glace, en particulier pour un véhicule automobile, comportant un bras d'essuie-glace (10) qui, à une extrémité (12), peut être relié à un balai d'essuie-glace (13), tandis qu'à une distance A de son autre extrémité (14) il est relié à un élément de tension (22) comprenant un ressort de traction (24) qui exerce sur l'extrémité (12) du bras d'essuie-glace (10) une force F en direction d'une surface à essuyer (20),
**caractérisé en ce qu'**
un pivot à excentrique (30) est prévu comme élément d'ajustage permettant de régler la force F.

2. Dispositif d'essuie-glace selon la revendication 1,
**caractérisé en ce que**
le bras d'essuie-glace (10) est, à son autre extrémité (14), relié en pouvant basculer à une tête rotative (16), l'élément de tension (22) étant tendu entre le bras d'essuie-glace (10) et la tête rotative (16).

3. Dispositif d'essuie-glace selon la revendication 1 ou 2,
**caractérisé en ce que**
l'élément de tension (22) est accroché à la tête rotative (16) autour de l'élément d'ajustage (30).

4. Dispositif d'essuie-glace selon une des revendications précédentes,
**caractérisé en ce que**
l'élément de tension (22) est relié par un crochet (26) passant autour de l'élément d'ajustage (30).

5. Dispositif d'essuie-glace selon une des revendications précédentes,
**caractérisé en ce que**
l'élément d'ajustage (30) présente une cannelure (44) pour le fixer.

6. Dispositif d'essuie-glace selon une des revendications précédentes,
**caractérisé en ce que**
l'élément d'ajustage (30) présente sur sa face frontale un quatre pans interne ou externe, une fente (40) ou une fente en croix servant pour l'ajustage.

7. Dispositif d'essuie-glace selon une des revendications précédentes,
**caractérisé en ce que**
l'élément d'ajustage (30) est empêché de tourner par rivetage, empreinte, pressage ou soudage.

8. Dispositif d'essuie-glace selon une des revendications précédentes,
**caractérisé en ce que**
le pivot à excentrique (30) en tant qu'élément d'ajustage comporte trois parties (32, 36), les deux parties (32) externes dans le sens longitudinal possédant un axe médian commun (34), tandis que la partie centrale (36) présente un axe médian (46) différent de l'axe médian (34) mais parallèle à celui-ci.

9. Dispositif d'essuie-glace selon la revendication 8,
**caractérisé en ce que**
les deux parties externes (32) ont des diamètres différents.

10. Dispositif d'essuie-glace selon la revendication 8 ou 9,
**caractérisé en ce que**
le pivot à excentrique (30) est monté dans un alésage (42) de la tête rotative, et présente le long d'une des deux parties externes (32) une cannelure (44) orientée en partie selon la direction axiale et destinée à servir de blocage, la partie médiane (36) étant configurée, au moins en largeur, de manière que l'élément de tension (22) peut être ajusté sans que la cannelure (44) et l'alésage (42) soient en prise.

11. Procédé d'ajustage de la force d'application d'un bras (10) d'un dispositif d'essuie-glace selon notamment une des revendications précédentes, présentant au moins les étapes suivantes :
- introduction partielle dans un alésage (42), d'un pivot à excentrique (30) qui présente, sur au moins une partie de sa longueur, un élément de sécurisation, notamment une cannelure (44),
- réglage de la force d'application, au moins par rotation,
- emmanchement du pivot à excentrique (30) au moins jusqu'à ce que des parties essentielles de l'élément de sécurisation (44) se trouvent à l'intérieur de l'alésage (42).
